# EUROPÄISCHE PATENTSCHRIFT

(11) **EP 2 379 851 B1**
(45) Veröffentlichungstag und Bekanntmachung des Hinweises auf die Patenterteilung: **16.12.2015**
(21) Anmeldenummer: 10700486.3
(22) Anmeldetag: 11.01.2010
(51) Int. Cl.: F01N 3/30, F01N 13/00, F01N 9/00, F01N 3/023, F01N 3/025, F01N 3/027

(54) **VORRICHTUNG UND VERFAHREN ZUR REGENERATION EINES IM ABGASTRAKT EINER BRENNKRAFTMASCHINE ANGEORDNETEN PARTIKELFILTERS**
DEVICE AND METHOD FOR REGENERATING A PARTICULATE FILTER ARRANGED IN THE EXHAUST SECTION OF AN INTERNAL COMBUSTION ENGINE
DISPOSITIF ET PROCÉDÉ DE RÉGÉNÉRATION D'UN FILTRE À PARTICULES DISPOSÉ DANS LA CONDUITE DE GAZ D'ÉCHAPPEMENT D'UN MOTEUR À COMBUSTION INTERNE

(30) Priorität: 22.01.2009 DE 102009005733; 14.12.2009 EP 09015450
(43) Veröffentlichungstag der Anmeldung: 26.10.2011
(73) Patentinhaber: MAN Truck & Bus AG, 80995 München (DE)
(72) Erfinder: DÖRING, Andreas, 82008 München (DE)
(74) Vertreter: Liebl, Thomas
(86) Internationale Anmeldenummer: PCT/EP2010/000084
(87) Internationale Veröffentlichungsnummer: WO 2010/083944

(56) Entgegenhaltungen:
- EP-A1- 1 669 564
- EP-A2- 0 341 832
- DE-A1-102004 019 659
- "CRT FILTER" DIESELNET TECHNOLOGY GUIDE, XX, XX, 1. Januar 2001 (2001-01-01), Seiten 1-09, XP001116186

## Beschreibung

Die Erfindung betrifft eine Vorrichtung zur Regeneration eines im Abgastrakt einer Brennkraftmaschine angeordneten Partikelfilters nach dem Oberbegriff des Anspruchs 1 sowie ein Verfahren zur Regeneration eines im Abgastrakt einer Brennkraftmaschine angeordneten Partikelfilters nach dem Oberbegriff des Anspruchs 4.

Insbesondere betrifft die Erfindung ein Verfahren und eine Vorrichtung zur Regeneration von Partikelfiltern bei mit Luftüberschuss betriebenen Brennkraftmaschinen, wie Dieselmotoren oder Benzinmotoren mit Direkteinspritzung, wie sie beispielsweise in Kraftfahrzeugen oder Nutzfahrzeugen zum Einsatz gelangen.

Zur Minimierung der kohlenstoffhaltigen Feinstoffpartikel werden in Fahrzeugen üblicherweise sogenannte Partikelabscheider oder Partikelfilter eingesetzt. Eine typische Partikelabscheider-Anordnung in Fahrzeugen ist beispielsweise aus EP 10 727 65 A2 bekannt. Derartige Partikelabscheider unterscheiden sich von den Partikelfiltern dadurch, dass der Abgasstrom entlang der Abscheidestrukturen geführt wird, während bei Partikelfiltern das Abgas durch das Filtermedium hindurchströmen muss. Infolge dieses Unterschiedes neigen Partikelfilter zur Verstopfung, was den Abgasgegendruck erhöht, das heißt eine unerwünschte Druckerhöhung am Abgasausgang einer Brennkraftmaschine hervorruft, was wiederum die Motorleistung mindert und einen erhöhten Kraftstoffverbrauch der Brennkraftmaschine zur Folge hat. Ein Beispiel für eine derartige Partikelfilter-Anordnung ist aus der EP 03 418 32 A2 bekannt.

Bei beiden vorstehend beschriebenen Anordnungen oxidiert jeweils ein stromauf des Partikelabscheiders bzw. des Partikelfilters angeordneter Oxidationskatalysator das Stickstoffmonoxid (NO) im Abgas mit Hilfe des ebenfalls enthaltenen Restsauerstoffes (O₂) zu Stickstoffdioxid (NO₂), und zwar gemäß folgender Gleichung:

2 NO + O₂ <-> 2 NO₂ (1)

Dabei ist zu beachten, dass das Gleichgewicht der obigen Reaktion bei hohen Temperaturen auf der Seite von NO liegt. Dies hat wiederum zur Folge, dass die erzielbare NO₂-Anteile bei hohen Temperaturen aufgrund dieser thermodynamischen Begrenzung limitiert sind.

Das NO₂ setzt sich wiederum im Partikelfilter mit den kohlenstoffhaltigen Feinstpartikeln zu CO, CO₂, N₂ und NO um. Mit Hilfe des starken Oxidationsmittels NO₂ erfolgt somit eine kontinuierliche Entfernung der angelagerten Feinstoffpartikeln, so dass Regenerationszyklen, wie sie aufwendig bei anderen Anordnungen durchgeführt werden müssen, entfallen können. Man spricht in diesem Zusammenhang von einer passiven Regeneration, gemäß nachstehender Gleichungen:

C + 2 NO₂ -> 2 NO + CO₂ (2)

NO₂ +C -> NO + CO (3)

Die Bildung von Kohlenmonoxid nach Gleichung 3 spielt dabei eine nur untergeordnete Rolle, meist findet eine komplette Oxidation des Kohlenstoffs bis zur Oxidationsstufe +4, in Form von Kohlendioxid, statt, wobei für diese Oxidation pro Kohlenstoffmolekül zwei NO₂-Moleküle benötigt werden.

Neben NO₂ wird an den platinhaltigen NO-Oxidationskatalysatoren auch SO₃ aus im Kraftstoff- und/oder Motorenöl enthaltenem Schwefel gebildet. Das SO₃ und NO₂ kondensieren an kalten Stellen im Abgastrakt zu hochkorrosiver Schwefel- bzw. Salpetersäure, so dass die Abgasanlage bis zu den Partikelfiltern in Edelstahl ausgeführt werden muss, um eine Korrosion zu vermeiden.

Gelingt keine vollständige Oxidation des im Partikelfilter eingelagerten Kohlenstoffs mit Hilfe von NO₂, so steigen der Kohlenstoffanteil und damit der Abgasgegendruck stetig an. Um dies zu vermeiden, werden aktuell die Partikelfilter vermehrt mit einer katalytischen Beschichtung zur Oxidation von NO versehen (EP 03 418 32 A2).

Dabei handelt es sich konkret um platinhaltige Katalysatoren. Der Nachteil dieses Verfahrens besteht jedoch darin, dass das am Partikelfilter gebildete NO₂ nur zur Oxidation von Partikeln dienen kann, die stromab der katalytisch aktiven Schicht zur NO-Oxidation abgeschieden wurden, das heißt somit innerhalb des Filtermediums. Bildet sich dagegen auf der Filteroberfläche und damit auf der katalytisch aktiven Schicht eine Schicht aus abgeschiedenen Partikeln, ein sogenannter Filterkuchen, aus, so liegt der partikelfilterseitige NO-Oxidationskatalysator stromab des Filterkuchens, so dass die dort abgeschiedenen Rußpartikel nicht mit Hilfe von NO₂ aus dem, auf dem Partikelfilter aufgebrachten, NO-Oxidationskatalysator oxidiert werden können. Hinzu kommt noch, dass genau genommen, nur die auf der Rohgasseite aufgebrachte Katalysatorschicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann.

Ein weiteres Problem der Beschichtung des Partikelfilters besteht darin, dass die geometrischen Oberflächen des Filters deutlich geringer als die der üblicherweise eingesetzten Katalysatorsubstrate sind. Der Grund hierfür liegt darin, dass die Filter relativ große freie Querschnitte und damit freies Volumen auf der Rohgasseite benötigen, um Ruß- und Motorölasche einzulagern. Werden keramische Filtersubstrate eingesetzt, wird dies durch eine geringe Zelldichte von 50 cpsi bis 200 cpsi realisiert. Demgegenüber werden reine Katalysatoren üblicherweise mit Zelldichten von 400 cpsi bis 900 cpsi ausgeführt. Durch die Anhebung von 50 cpsi auf 900 cpsi ergibt sich eine Erhöhung der geometrischen Oberfläche von 1 m²/l auf 4 m²/l, wodurch erhebliche Umsatzsteigerungen an den Katalysatoren möglich werden.

Aus diesen Gründen kann, trotz der katalytischen Beschichtung des Filters, nicht auf einen NO-Oxidationskatalysator vor dem Partikelfilter verzichtet werden, so dass sich ein relativ großes Bauvolumen ergibt. Dies ist selbst dann der Fall, wenn die NO-Oxidationskatalysatoren und die Partikelfilter eine bauliche Einheit bilden, in dem der Eintrittsbereich des Partikelfilters als NO-Oxidationskatalysator ausgeführt ist, wie dies beispielsweise bei der DE 103 270 30 A1 beschrieben ist.

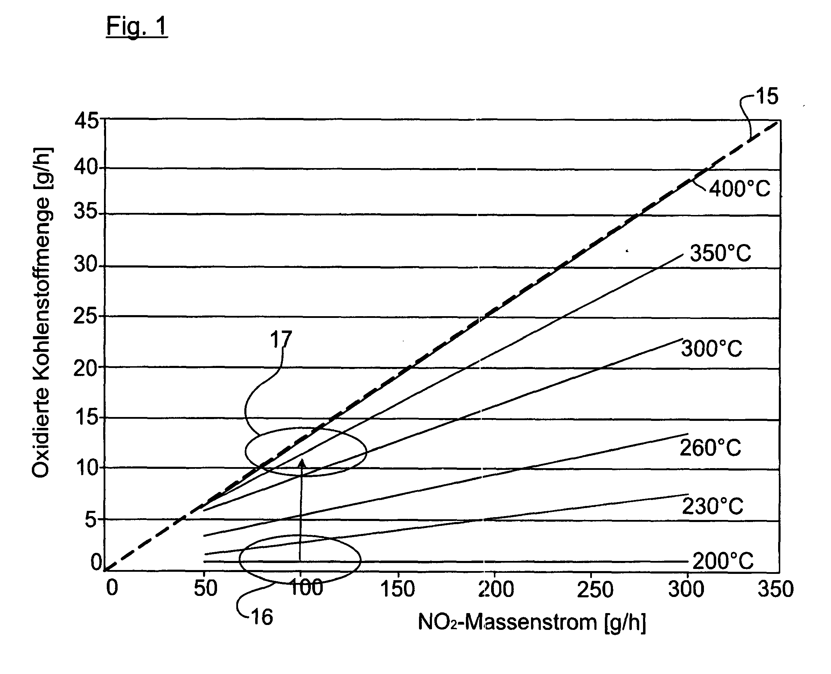

Bei all diesen Varianten zur passiven Regeneration über NO₂ ist zu beachten, dass die Rußoxidation unterhalb von 200°C bis 230°C auch durch eine Anhebung der NO₂-Mengen nicht weiter gesteigert werden kann. Bei ca. 370°C wird das Umsatzmaximum erreicht. Ab dieser Temperatur läuft die Rußoxidation nach den oben beschriebenen Reaktion (2) ab, das heißt zwei NO₂-Moleküle reagieren mit einem Kohlenstoffmalekül. Dies bedeutet in Massen, dass mit einem Gramm NO₂ 0,13g Kohlenstoff oxidiert werden können, das heißt die Rußoxidation lässt sich durch Anheben der NO₂-Menge beliebig erhöhen. Dargestellt ist dieser Zusammenhang in Fig. 1.

Liegen die Temperaturen unterhalb von 200°C - 230°C kann somit keine sichere Funktion des Partikelfilters sichergestellt werden. Dies tritt üblicherweise bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auf. Daher wird speziell in solchen Fällen eine zweite Möglichkeit der Partikelfilterregeneration angewendet, in dem die Abgastemperatur aktiv angehoben wird. Dies geschieht üblicherweise durch die Zugabe von Kohlenwasserstoffen (HC) stromauf von Katalysatoren, insbesondere HC-Oxidationskatalysatoren. Auf Grund der Exothermie der Oxidation der zugegebenen Kohlenwasserstoffe mit Hilfe der Katalysatoren wird ein deutlicher Temperaturanstieg erreicht.

"HC" + O₂ -> CO + H₂O (4)

"HC" + O₂ -> CO₂ + H₂O (5)

Um diese Katalysatoren ausreichend thermisch zu stabilisieren, enthalten diese als Aktivkomponente meist Palladium. Palladium besitzt keine NO-Oxidationsaktivität und verringert zudem die NO-Oxidationsaktivität von eventuell in den Katalysatoren enthaltenem Platin. Dies hat zur Folge, dass HC-Oxidationskatalysatoren eine deutlich geringe NO-Oxidationsaktivität aufweisen, als reine NO-Oxidationskatalysatoren.

Gelingt durch die Zudosierung von Kohlenwasserstoffen eine Temperaturanhebung auf über 600°C, kommt es zu einer Oxidation bzw. zum Abbrennen des im Partikelfilter abgeschiedenen Kohlenstoffs mit Hilfe von Sauerstoff, gemäß nachstehender Gleichungen:

C + O₂ -> CO₂ (6)

2C + O₂ -> 2CO (7)

Allerdings besteht bei dieser sogenannten aktiven Filterregeneration die Gefahr, dass es durch das exotherme Abbrennen des kohlenstoffhaltigen Rußes zu einem starken Temperaturanstieg auf über 1000°C und damit zur Schädigung des Partikelfilters und/oder nachgeschalteter Katalysatoren kommen kann. Da zudem die Temperaturerhöhung für mehrere Minuten aufrecht erhalten werden muss, um eine quantitative Oxidation der Rußpartikel sicherzustellen, ist der Bedarf an Kohlenwasserstoffen nicht unerheblich und verschlechtert den Wirkungsgrad der Brennkraftmaschine, da üblicherweise als Kohlenwasserstoffquelle der Kraftstoff verwendet wird.

Ein weiteres Problem stellen, im Gegensatz zur passiven Regeneration, die hohen Kohlenmonoxidemissionen während der Regenertion dar, deren Bildung in Gleichung 7 beschrieben ist. Aus diesem Grund muss auf dem Partikelfilter und/oder stromab des Partikelfilters ein weiterer Katalysator zur Oxidation des während der Regeneration gebildeten Kohlenmonoxids angebracht werden, um dessen Austritt in die Umwelt zu vermeiden.

Eine einfache Kombination der passiven und aktiven Regeneration, indem Kohlenwasserstoffe vor NO-Oxidationskatalysatoren zugegeben werden, ist nicht zielführend:
Durch die Temperaturanhebung auf über 600°C wird an den NO-Oxidationskatalysatoren auf Grund der thermodynamischen Begrenzung kaum mehr NO₂ gebildet. Zudem wird die Oxidation von NO durch die hohen Mengen an Kohlenwasserstoffen behindert, wodurch es zur starken Verminderung der NO₂-Bildung kommt. Dies führt dazu, dass die Partikel allein mit Hilfe von Sauerstoff oxidiert werden müssen, da in dieser Phase kein NO₂ zur Verfügung steht, was die Regenerationszeit verlängert und zu hohen Kohlenmonoxidemissionen führt.

Gleichzeitig sind die NO-Oxidationskatalysatoren gegenüber thermischer Schädigung weit weniger stabil als Katalysatoren zur Kohlenwasserstoffoxidation, da es bei Temperaturen über 550°C zu einer irreversiblen Sinterung der Aktivkomponenten und damit einem Rückgang der NO-Oxidationsaktivität kommt.

Die DE 10 2004 019 659 A1 zeigt eine Vorrichtung zur Regeneration eines im Abgastrakt einer Brennkraftmaschine angeordneten Partikelfilters mit wenigstens einem stromauf des Partikelfilters angeordneten NO-Oxidationskatalysator zur Oxidation von NO, wobei stromauf des Partikelfilters ferner eine Heizeinrichtung in Form eines Brenners vorgesehen ist, mittels der ein zum Partikelfilter geführter Abgasstrom aufheizbar ist, wobei der Brenner, der Oxidationskatalysator und der Partikelfilter seriell angeordnet sind.

Es ist daher Aufgabe der vorliegenden Erfindung, eine Vorrichtung und ein Verfahren zur Regeneration eines im Abgastrakt einer Brennkraftmaschine angeordneten Partikelfilters zur Verfügung zu stellen, mittels der bzw. dem auf baulich einfache und kompakte Weise eine funktionssichere und zuverlässige Partikelfilter-Regeneration erzielt werden kann.

Diese Aufgabe wird bezüglich der Vorrichtung gelöst mit den Merkmalen des Anspruchs 1. Bezüglich des Verfahrens wird diese Aufgabe gelöst mit den Merkmalen des Anspruchs 4. Vorteilhafte Ausgestaltungen hierzu sind jeweils Gegenstand der darauf rückbezogenen Unteransprüche.

Erfindungsgemäß ist stromauf des Partikelfilters zusätzlich zum wenigstens einen NO-Oxidationskatalysator wenigstens eine Heizeinrichtung vorgesehen, mittels der ein zum Partikelfilter geführter Abgasstrom in Abhängigkeit von definierten Regenerationsparametern aufheizbar ist, wobei die Heizeinrichtung strömungstechnisch parallel zu dem NO-Oxidationskatalysator angeordnet ist, so dass ein erster Abgasstrom durch den NO-Oxidationskatalysator und ein zweiter, aufzuheizender Abgasstrom durch oder über die Heizeinrichtung strömt, wobei die beiden Abgasströme stromab des NO-Oxidationskatalysators und der Heizeinrichtung sowie stromauf des Partikelfilters zusammengeführt werden. Die Aufheizung erfolgt insbesondere in Abhängigkeit von einem Beladungsgrad des Partikelfilters und/oder einem Regenerations-Wirkungsgrad bzw. einer Regenerationsarbeit einer NO₂-Regeneration des Partikelfilters mittels einer am wenigstens einen NO-Oxidationskatalysator gebildeten NO₂-Menge auf eine definierte Temperatur aufheizbar ist. Durch den erhitzten Abgasstrom kann somit die Temperatur am Partikelfilter angehoben werden, wobei gleichzeitig noch hohe Mengen an NO₂ aus dem NO-Oxidationskatalysator zur Verfügung stehen, da im Bereich des NO-Oxidationskatalysators keine, zu ungunsten der NO₂-Bildung auswirkende Temperaturerhöhung erfolgt bzw. keine erhöhten Kohlenwasserstoffkonzentrationen, die zu einem Rückgang der NO-Oxidationsaktivität führen, vorliegen. Diese Temperaturerhöhung des Abgasstroms vor dem Partikelfilter findet somit in einem Teil des Abgasstrangs, der stromab des NO-Oxidationskatalysators und/oder parallel zum NO-Oxidationskatalysator sowie stromauf des Partikelfilters liegt, statt. Erfindungsgemäß wird hier somit eine funktionssichere, die jeweiligen Vorteile, ausnutzende und negative Wechselwirkungen vermeidende Kombination einer aktiven und einer passiven Regeneration eines Partikelfilters zur Verfügung gestellt.

Mit einer derartigen erfindungsgemäßen Lösung ist es somit möglich, die Partikelfilterregeneration ausschließlich über die NO₂-Menge ablaufen zu lassen, wobei im Bedarfsfall die Temperatur am Partikelfilter mittels einer als Steuer- und/oder Regeleinrichtung ausgebildeten elektronischen Kontrolleinheit in das für die jeweils gewünschte Reaktion optimale Temperaturfenster verschoben wird. Das heißt, dass der zum Partikelfilter geführte Abgasstrom mittels der wenigstens einen Heizeinrichtung zu vorgegebenen Zeiten bzw. vorgegebenen Betriebszuständen der Brennkraftmaschine und/oder des Nachbehandlungssystems lediglich auf eine solche Temperatur aufgeheizt wird, die unter der Regenerationstemperatur einer reinen aktiven Partikelfilterregeneration mittels Zugabe von Kohlenwasserstoffen in dem Abgasstrom liegt. Bevorzugt wird hierbei dieser zum Partikelfilter geführte Abgasstrom auf eine Temperatur von kleiner 600°C, bevorzugt von kleiner oder gleich in etwa 550°C, höchst bevorzugt von kleiner oder gleich in etwa 450°C, aufgeheizt. Besonders bevorzugt liegen die Temperaturen dabei in einem Temperaturfenster von 300°C bis 550°C, höchst bevorzugt in einem Temperaturfenster von 350°C bis 450°C, aufgeheizt. Die Temperatur des zum Partikelfilter geführten Abgasstroms wird somit bei der erfindungsgemäßen Lösung besonders bevorzugt in Abhängigkeit von einer NO₂-Konzentration und/oder vom Beladungszustand des Partikelfilters mit kohlenstoffhaltigen Partikeln in einem definierten Bereich wenigstens eines Abgasstroms vorgegeben, und zwar mit Hilfe einer Steuer- und/oder Regeleinrichtung als elektronischer Kontrolleinrichtung.

Aufgrund der erfindungsgemäß möglichen relativ hohen Temperaturen bei gleichzeitiger Unterstützung der Rußoxidation durch das starke Oxidationsmittel NO₂ gelingt es, die Regenerationsdauer zu verkürzen und die Regenerationstemperatur auf ca. 400°C abzusenken. Dadurch werden die für die Temperaturerhöhung benötigte Kohlenwasserstoffmenge sowie die durch die Regeneration auftretenden Kohlenmonoxidemissionen ebenso verringert wie die Gefahr eines unkontrollierbaren Temperaturanstieges und eine damit verbundene thermische Schädigung des Partikelfilters oder nachgeschalteter Katalysatoren.

Um eine sichere Regeneration des Partikelfiilters bzw. Partikelabscheiders sicherzustellen, ist gemäß einer besonders bevorzugten Ausführungsform vorgesehen, dass wenigstens während eines definierten Regenerationsbetriebes das Massenverhältnis zwischen im Abgas enthaltenen Kohlenstoff und Stickstoffdioxid mindestens 1:4 beträgt, bevorzugt mindestens 1:8. Dieser Regenerationsbetrieb ist insbesondere durch eine definierte Anhebung der Abgastemperatur stromauf des Partikelfilters gekennzeichnet.

Gemäß einer ersten Vorrichtungsvariante kann stromauf des NO-Oxidationskatalysators eine Zweigleitung von einer zum NO-Oxidationskatalysator führenden Zuführleitung abgezweigt werden, wobei die Zweigleitung dann stromab des NO-Oxidationskatalysators in eine vom NO-Oxidationskatalysator zum Partikelfilter führende Abführleitung einmündet. Die Heizeinrichtung ist dann im Bereich der Zweigleitung anzuordnen. Alternativ dazu ist jedoch auch eine bauliche Ausführung möglich, bei der der NO-Oxidationskatalysator die Heizeinrichtung wenigstens bereichsweise umschließt oder umgibt. Hierdurch wird insbesondere ein Auskühlen der Heizeinrichtung vorteilhaft vermieden.

Zur strömungstechnischen Aufzweigung eines Abgasstroms ist gemäß einer weiteren besonders bevorzugten Ausgestaltung der erfindungsgemäßen Lösung eine mittels einer Steuer- und/oder Regeleinrichtung gekoppelte Absperreinrichtung, zum Beispiel eine Klappe oder dergleichen, vorgesehen, mittels der die Menge des über den NO-Oxidationskatalysator und/oder des über die Heizeinrichtung geführten Gasstromes in Abhängigkeit von definierten Betriebs- oder Absperrparametern gesteuert oder geregelt werden kann.

Die Heizeinrichtung selbst ist bevorzugt durch einen Heizkatalysator gebildet, der wiederum bevorzugt als Oxidationskatalysator ausgeführt ist. Besonders bevorzugt ist weiter eine Zudosiervorrichtung vorgesehen, mittels der dem Abgasstrom stromauf des Heizkatalysators ein Reduktionsmittel für eine exotherme Reaktion in Abhängigkeit von definierten Dosierparametern zu vorgegebenen Zeiten sowie in vorgegebener Menge zudosiert wird. Die Zudosierung erfolgt dabei insbesondere periodisch. Für den besonders bevorzugten Fall, dass der Heizkatalysator ein HC-Oxidationskatalysator ist, ist das Reduktionsmittel bevorzugt durch Kohlenwasserstoffe gebildet.

Die Kohlenwasserstoffe werden dabei bevorzugt durch Kraftstoff gebildet. Besonders bevorzugt ist es, die Zugabe der Kohlenwasserstoffe durch eine im Abgastrakt vorgesehene, separate Zudosiervorrichtung, beispielsweise eine Einspritzdüse oder dergleichen, zuzudosieren. Diese Zudosierung erfolgt dann stromauf des Heizkatalysators, indem dem Abgasstrom zu vorgegebenen Zeiten eine vorgegebene Menge Kohlenwasserstoffe zudosiert bzw. zugedüst wird. Besonders bevorzugt ist hierbei, wie bereits zuvor erwähnt, eine entsprechend vorgegebener Steuer- und/oder Regelparameter erfolgende, zum Beispiel periodisch wiederkehrende, Zudosierung mit Hilfe einer elektronischen Kontrolleinheit.

Zum Oxidieren der zudosierten Kohlenwasserstoffe kann somit der zu erhitzende Abgasstrom über die bevorzugt als HC-Oxidationskatalysator ausgebildete Heizeinrichtung geführt werden, wodurch der Abgasstrom erhitzt wird. Die dadurch zu erzielende Heizleistung ist allerdings durch die vorhandene Sauerstoffmenge limitiert. Denn für den Fall, dass der Lambdawert, also das Verhältnis von Sauerstoffzu Kraftstoffmenge, den Wert 1 erreichen sollte, ist keine Oxidation der Kohlenwasserstoffe mehr möglich. Um dies zu vermeiden, wird gemäß einer weiteren bevorzugten Ausgestaltung vorgeschlagen, dem zu erhitzenden Abgasstrom, nach Erreichen einer bestimmten vorgegebenen Temperatur und/oder einer vorgegebenen Zeit und/oder bei Unterschreiten eines vorgegebenen Lambda- oder Sauerstoffwerts, Frischluft zuzuführen. Diese optionale Frischluftzuführung bewirkt ein Anheben des Lambdawertes und damit auch eine Anhebung der maximal möglichen Heizleistung. Die Frischluft kann dabei generell auf der Ladeluftseite der Brennkraftmaschine abgezweigt werden, konkret zum Beispiel auch stromauf und/oder stromab einer Einmündung einer Abgasrückführleitung in eine Ladeluftleitung der Brennkraftmaschine. Weiterhin ist der Einsatz eines Gebläses oder Verdichters zur Zuführung von Frischluft denkbar.

Eine alternative Möglichkeit zur Anhebung der Abgastemperatur besteht darin, einen bevorzugt mit Kraftstoff betriebenen Brenner als Heizeinrichtung einzusetzen. Für diesen gilt in besonderem Maße die oben beschriebene Problematik der zu geringen Luftverhältnisse, die analog der Lösung für den Heizkatalysator umgangen werden kann.

Die Heizeinrichtung, insbesondere der Heizkatalysator, kann grundsätzlich außerhalb des Abgastraktes angeordnet werden, das heißt so, dass dieser nicht vom Abgas umströmt wird. Dies führt allerdings relativ schnell zu einer Auskühlung dieser Heizeinrichtung, insbesondere des Heizkatalysators. Sinnvoller ist es daher, die Heizeinrichtung, insbesondere den Heizkatalysator, so im Abgastrakt anzuordnen, dass er, zumindest teilweise, vom Abgas umströmt wird, wodurch die Wärmeverluste an die Umgebung verringert werden.

Insbesondere ist es möglich, den zum Beispiel HC-Oxidationskatalysator als Heizkatalysator mit dem NO-Oxidationskatalysator zu umschließen. Zudem ist es möglich, für den NO-Oxidationskatalysator und den zum Beispiel HC-Oxidationskatalysator als Heizkatalysator ein gemeinsames Substrat zu verwenden, das in unterschiedlichen Bereichen unterschiedliche katalytische Beschichtungen aufweist. Durch strömungstechnische Einbauten stromauf des Substrates, wie Leitbleche und/oder Trennwände, wird sichergestellt, dass während der Regenerationsphase keine Kohlenwasserstoffe auf die Bereiche mit NO-Oxidationsbeschichtung treffen.

Zudem ist die Unterbringung der Heizeinrichtung, insbesondere des Heizkatalysators, und des NO-Oxidationskatalysators in einem gemeinsamen Gehäuse denkbar.

Um das System weiter zu verbessern, ist es weiterhin möglich, den bevorzugt als HC-Oxidationskatalysator ausgebildeten Heizkatalysator zusätzlich mit einer NO-Oxidationsaktivität zu versehen, wodurch die NO₂-Anteile im Nicht-Regenerationsbetrieb angehoben und damit die Oxidation der Partikel mit Hilfe der passiven Regeneration verbessert werden. Dadurch gelingt es, die Intervalle zwischen den aktiven Temperaturanhebungen zu verlängern. Der Heizkatalysator sollte hierbei thermisch stabiler ausgeführt sein als der reine NO-Oxidationskatalysator. Dies hat üblicherweise eine geringere NO-Oxidationsaktivität im Vergleich zu den reinen NO-Oxidationskatalysatoren zur Folge, wie dies bereits zuvor erwähnt worden ist.

Um, insbesondere beim Einsatz von HC-Oxidationskatalysatoren als Heizkatalysatoren, hohe Kohlenwasserstoffkonzentrationen stromab des Partikelfilters zu vermeiden, kann dieser mit einem Katalysator zur Oxidation von Kohlenwasserstoffen versehen werden. Auch ein stromauf- und/oder stromab des Partikelfilters angebrachter bzw. angeordneter Katalysator mit Kohlenwasserstoffoxidationsaktivität ist denkbar. Als Aktivkomponenten kommen unter anderem Vanadiumoxid, Cer, Zeolithe und Elemente der Platinmetallgruppe in Frage.

Demgegenüber kommen sowohl für die NO- als auch für die HC-Oxidationskatalysatoren als Aktivkomponenten hauptsächlich Metalle der Platinmetallgruppe in Frage, allerdings unterscheidet sich deren Zusammensetzung: Um die thermische Stabilität der HC-Oxidationskatalysatoren zu verbessern, liegt zum Beispiel deren Palladiumanteil höher als der der NO-Oxidationskatalysatoren. Für die HC-Oxidationskatalysatoren kommt grundsätzlich als Aktivelement auch Cer in Frage.

Die Aktivität beider Katalysatortypen kann zum Beispiel durch den Einsatz von Zeolithen zusätzlich erhöht werden.

Die Regeneration kann weiter optional verbessert werden, indem das NO₂-Angebot angehoben wird. Dies kann durch Anheben der NOₓ-Rohemission erreicht werden. Dies gelingt durch Ändern von motorischen Betriebsparametern wie Einspritzdruck, Abgasrückführungsraten, Spritzbeginn, Anzahl der Einspritzungen, Saugdrosselstellung etc. Durch das höhere NO₂-Angebot steigt gleichzeitig die an den NO-Oxidationskatalsatoren gebildete NO₂-Menge. Eine weitere Möglichkeit besteht darin, die gebildete NO₂-Menge durch Verbesserung der NO-Oxidation an den NO-Oxidationskatalysatoren zu erhöhen. Dies gelingt üblicherweise durch Erhöhen der Verweilzeit, insbesondere durch Verringern der über die Katalysatoren geleiteten Abgasmenge, und/oder durch Erhöhen der Temperatur der NO-Oxidationskatalysatoren. Um dies zu erreichen, können unter anderem die bereits oben beschriebenen Maßnahmen zur Anhebung der NOx-Rohemission eingesetzt werden.

Um neben den Partikeln auch die Emission von Stickoxiden zu verringern, können im Abgastrakt bzw. Abgasstrang zusätzlich Katalysatoren zur NO_{X}-Reduktion vorgesehen sein, wie beispielsweise wenigstens ein NO_{X}-Speicherkatalysator und/oder wenigstens ein SCR-Katalysator. Die NO_{X}-Speicherkatalysatoren können stromab der Oxidationskatalysatoren und/oder stromab des Partikelfilters angeordnet sein, während für die SCR-Katalysatoren auch eine Positionierung stromauf der Oxidationskatalysatoren denkbar ist. Für die NO_{X}-Speicherkatalysatoren werden Platin- und/oder Barium und/oder Calcium als Aktivkomponenten bevorzugt eingesetzt. Demgegenüber ist für die SCR-Katalysatoren der Einsatz von wolframoxidstabilisiertem Vanadiumpentoxid, vorzugsweise auf Titandioxidbasis, oder Eisenzeolithe oder Kupferzeolithe oder Kobaltzeolithe oder Zirkonoxid sinnvoll. Der Bauraum eines derartigen Systems zur Verminderung von Stickoxiden und Partikeln lässt sich verringern, indem der wenigstens eine Partikelfilter und der wenigstens eine SCR-Katalysator und/oder der wenigstens eine NOₓ-Sperrkatalysator eine bauliche Einheit bilden, wobei der Partikelfilter mit einer SCR-Katalysator- und/oder NOₓ-Speicherkatalysatarbeschichtung versehen sein kann.

Zusammenfassend kann daher festgehalten werden, dass mit der erfindungsgemäßen Lösung, bei der eine aktive und passive Partikelfilterregeneration wenigstens zeitweise kombiniert werden, eine Reihe von Vorteilen erzielt werden können: So kann die Regenerationsfähigkeit des Systems aktiv beeinflusst werden. Weiter kann die Einstellung so vorgenommen werden, dass die größte Regenerationsarbeit über die Rußoxidation mit Hilfe von NO₂, das an einem vorgeschalteten NO-Oxidationskatalysator gebildet wird, abläuft, das heißt, das Reduktionsmittel beziehungsweise Kraftstoff nur dann zugegeben wird, wenn die Regenerationsarbeit mittels NO₂ nicht ausreichen sollte, so dass ein Kraftstoffverbrauch gegenüber der reinen aktiven Partikelfilterregeneration deutlich minimiert wird. Weiter geht mit der erfindungsgemäßen Lösung eine deutlich geringere thermische Belastung des Partikelfilters, insbesondere des Dieselpartikelfilters, und eventuell nachgeschalteter Abgasnachbehandlungskomponenten einher. Ein weiterer wesentlicher Vorteil ist, dass die Regeneration sehr gleichmäßig ablaufen kann, wodurch die Gefahr von sogenannten Rußnestern und Durchbränden des Partikelfilters vermindert wird. Ein weiterer wesentlicher Vorteil kann darin gesehen werden, dass der Platinbedarf und damit die Kosten zur Herstellung des Abgasnachbehandungssystems deutlich unter denen von reinen HCl-Regenerationssystemen (Hydrocarbon injection), das heißt reinen aktiven Regenerationssystemen liegen, da geringere Mengen von Kohlenwasserstoffen oxidiert werden müssen und eine Oxidation von, während der aktiven Regeneration gebildetem ohlenmonoxid nicht notwendig ist. Und schlieeten aufgrund der geringen treibenden Temperaturdifferenz weniger Wärmeverluste an die Umgebung auf als bei der reinen aktiven Partikelfilterregeneration, wodurch weniger Aufwendungen für Isolierung und Material etc. notwendig sind.

Mehrere Ausführungsbeispiele der vorliegenden Erfindung werden nachfolgend anhand einer Zeichnung näher erläutert.

Es zeigen:
- Fig. 1: schematisch ein Diagramm, welches die Verbesserung der Rußoxidation durch Anhebung der Temperatur beispielhaft zeigt;
- Fig. 2: schematisch ein Diagramm, welches die Verbesserung der Rußoxidation durch Anhebung des NO₂-Angebots und der Temperatur beispielhaft zeigt;
- Fig. 3: eine erste Ausführungsform einer parallelen Anordnung eines NO-Oxidationskatalysators und eines als HC-Oxidationskatalysator ausgeführten Heizkatalysators stromauf eines Partikelfilters;
- Fig. 4: schematisch eine alternative Ausführungsform einer parallelen Anordnung eines NO-Oxidationskatalysators und eines als HC-Oxidationskatalysator ausgebildeten Heizkatalysators stromauf eines Partikelfilters;
- Fig. 5: schematisch eine nicht-erfindungsgemäßen Vorrichtung zur Regeneration eines im Abgastrakt einer Brennkraftmaschine angeordneten Partikelfilters mit einer seriellen Anordnung eines NO-Oxidationskatalysators und eines HC-Oxidationskatalysator stromauf eines Partikelfilters; und
- Fig. 6: schematisch eine weitere nicht-erfindungsgemäße alternative Ausführungsform zur Fig. 5, bei der anstelle eines Heizkatalysators ein Brenner eingesetzt wird.

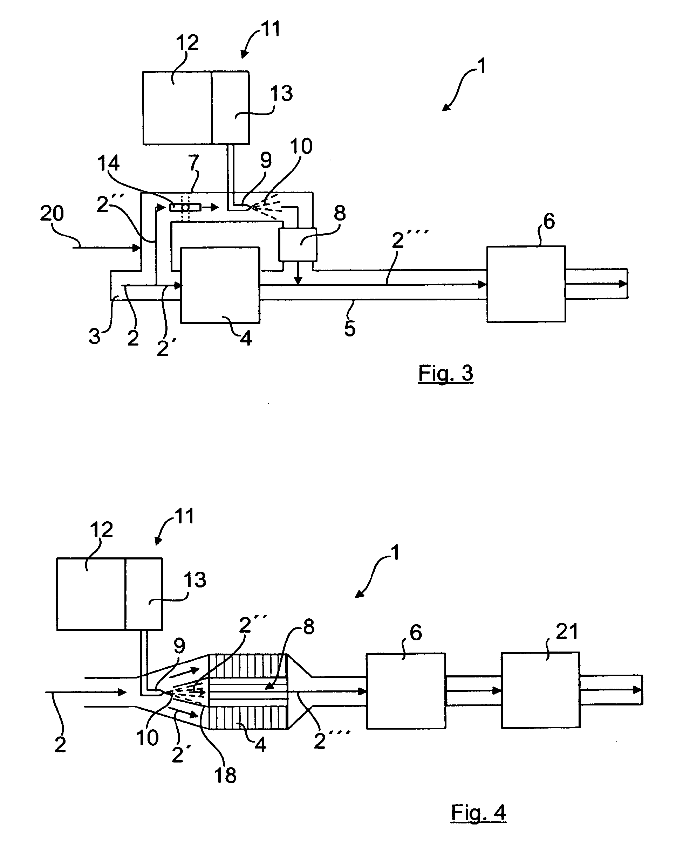

In der Fig. 3 ist eine erste beispielhafte erfindungsgemäße Ausführungsform gezeigt, bei der im Abgastrakt 1 einer hier nicht dargestellten Brennkraftmaschine, insbesondere einer Diesel-Brennkraftmaschine, ein Abgasstrom 2 mittels einer Zuführleitung 3 zu einem NO-Oxidationskatalysator 4 geführt wird. Von diesem NO-Oxidationskatalysator 4 führt eine Abführleitung 5 zu einem Partikelfilter 6.

Stromauf des NO-Oxidationskatalysators 4 zweigt eine Zweigleitung 7 von der Zuführleitung 3 ab und mündet stromab des NO-Oxidationskatalysators 4 in die Abführleitung 5 ein.

In dieser Zweigleitung 7 ist ein HC-Oxidationskatalysator 8 als Heizeinrichtung angeordnet. Weiter ist in der Zweigleitung 7 stromauf des HC-Oxidationskatalysators 8 eine Düse 9 angeordnet, mittels der Kraftstoff 10 als Reduktionsmittel in die Zweigleitung 7 stromauf des HC-Oxidationskatalysators 8 zugedüst werden kann. Aus diesem Grund ist die Düse 9 Bestandteil einer Zudosiervorrichtung 11, die neben der Düse 9 auch noch einen Kraftstoffbehälter 12 und eine die Zudosierung steuernde beziehungsweise regelnde Steuer- und/oder Regeleinrichtung 13 aufweist.

Optional ist in der Zweigleitung 7 stromauf der Düse 9 ein Absperrorgan 14 angeordnet, das ebenfalls mit einer elektronischen Kontrolleinheit, die hier allerdings nicht dargestellt ist, gekoppelt sein kann, um zu vorgegebenen Zeiten eine definierte Abgasmenge von dem Abgasstrom 2 abzuzweigen, so dass ein erster Abgasstrom 2' durch den NO-Oxidationskatalysator 4 und ein zweiter Abgasstrom 2" durch die Zweigleitung 7 strömt. Diese beiden Abgasströme werden dann stromab des NO-Oxidationskatalysators 4 und stromab des HC-Oxidationskatalysators 8 wieder zusammengeführt und als Abgasstrom 2"' dem Partikelfilter 6 zugeführt.

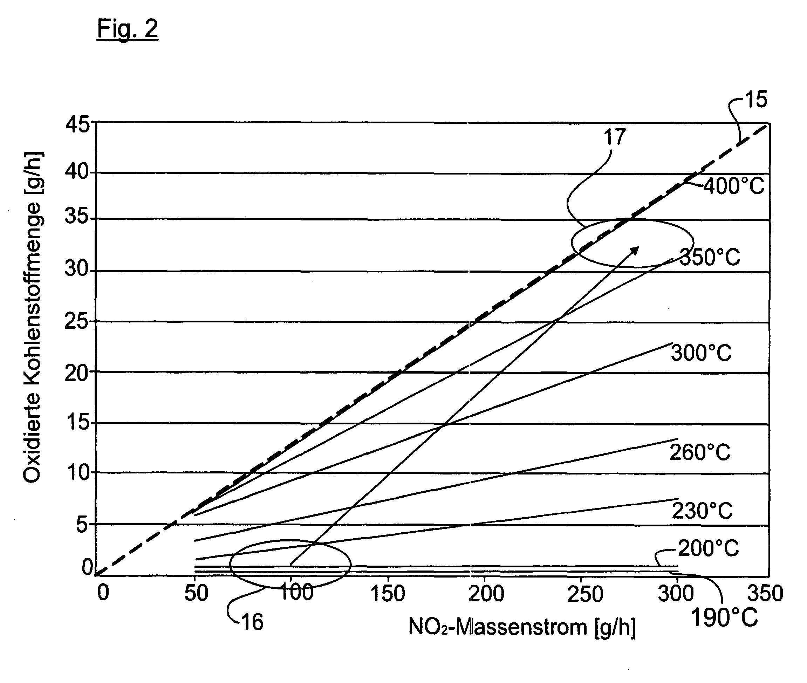

Wie dies in der Fig. 3 lediglich schematisch dargestellt ist, ist der NO-Oxidationskatalysator 4 wesentlich größer ausgelegt und dimensioniert als der HC-Oxidationskatalysator 8, was dadurch bedingt ist, dass die Partikelfilterregeneration im Wesentlichen als NO₂-basierte Partikelfilterregeneration durchgeführt werden soll, das heißt mittels des im NO-Oxidationskatalysator 4 gebildeten NO₂. Lediglich für den Fall, dass die Regenerationsarbeit des im bzw. am NO-Oxidationskatalysator 4 gebildeten NO₂ nicht ausreichen sollte, wird entsprechend gesteuert oder geregelt mittels der Steuer- und/oder Regeleinrichtung 13 über die Düse 9 Kraftstoff 10 in die Zweigleitung 7 zudosiert. Gleichzeitig wird durch entsprechende Ansteuerung des Absperrorgans 14 ein entsprechender Abgasmassenstrom als zweiter Abgasstrom 2" über die Zweigleitung 7 geleitet, um dem HC-Oxidationskatalysator 8 einen mit Kohlenwasserstoffen angereicherten Abgasstrom zuzuführen, wodurch im HC-Oxidationskatalysator eine exotherme Reaktion stattfindet, die einen heißen zweiten Abgasstrom 2" erzeugt, der stromab des NO-Oxidationskatalysators 4 mit dem ersten Abgasstrom 2' vermischt wird, so dass dieser mit nach wie vor NO₂-angereicherte erste Abgasstrom 2' auf ein höheres Temperaturniveau gehoben wird, wodurch die NO₂-basierte Rußoxidation im Partikelfilter 6 in einer optimierten Weise abläuft, wie dies schematisch in der Fig. 1 dargestellt ist. Dort ist mit 15 die den 100%igen-Umsatz kennzeichnende Ideallinie eingezeichnet, sprich hier werden pro zugeführtes Gramm NO₂ 0,13g Kohlenstoff oxidiert. Wird nunmehr von der elektronischen Kontrolleinheit erfasst, dass die NO₂-Regenerationsarbeit im unteren Temperaturbereich 16 keine zufriedenstellenden Regenerationsergebnisse mehr liefert und/oder der Beladungsgrad des Partikelfilters über ein vorgegebenes Limit angestiegen ist, so wird durch die zuvor geschilderten Maßnahmen das TemperaturNiveau auf den oberen Temperaturbereich 17 angehoben, um den Rußabbrand wieder effektiver und optimiert zu gestalten. Dabei ist es aufgrund der erfindungsgemäßen Kombination einer aktiven und passiven Regenerationsmöglichkeit zum Beispiel ausreichend, den Abgasstrom, der zum Partikelfilter 6 geführt wird, auf ein Temperaturniveau anzuheben, das bevorzugt im Bereich von 370°C bis 400°C liegt. Durch die in der Fig. 2 gezeigte zusätzliche Anhebung des NO₂-Niveaus durch die bereits oben beschriebene Anhebung der NOₓ-Rohemissionen und/oder Verbesserung der NO-Oxidationsaktivität des NO-Oxidationskatalysators mit Hilfe von veränderten Betriebsparametern der Brennkraftmaschine und/oder der NO-Oxidationskatalysatoren kann die Regenerationsfähigkeit im Gegensatz zur reinen Anhebung der Abgastemperatur zusätzlich verbessert werden.

Die Bestimmung der NO₂-Menge und/oder der Regenerationsfähigkeit und/oder des Beladungsgrads des Partikelfilters können beispielsweise durch mathematische Modelle und/oder Kennfelder und/oder durch Abgassensoren, insbesondere Drucksensoren, NO₂-Sensoren, NOₓ-Sensoren, Temperatursensoren und/oder Sensoren zur Bestimmung der Partikel- bzw. Russmenge ermittelt werden.

Das oben Genannte gilt in analoger Weise für die alternative Ausgestaltung gemäß der Fig. 4, bei der, im Unterschied zur Ausgestaltung nach Fig. 3 eine Parallelschaltung von NO-Oxidationskatalysator 4 und HC-Oxidationskatalysator 8 dahingehend vorgenommen worden ist, dass der den Heizkatalysator bzw. die Heizeinrichtung bildende HC-Oxidationskatalysator 8 hier von dem NO-Oxidationskatalysator wenigstens bereichsweise umschlossen wird. Dadurch wird die Auskühlung des HC-Oxidationskatalysators 8 besser vermieden als dies bei einer separaten Anordnung eines HC-Oxidationskatalysators 8 der Fall ist. Die Zudosierung des Kraftstoffes 10 erfolgt hier in analoger Weise zur Ausführungsform nach Fig. 3 lediglich zum HC-Oxidationskatalysator 8 hin. Zur Aufteilung der Abgasströme durch den NO-Oxidationskatalysator 4 einerseits und den HC-Oxidationskatalysator 8 andererseits können auch hier wieder Strömungsleitelemente vorgesehen sein, zum Beispiel ein in der Fig. 3 lediglich schematisch dargestelltes Leitelement 18. Weiter kann im Bereich dieses Leitelements 18 auch ein Absperrorgan vorgesehen sein, dass die Menge bzw. generell den Zufluss eines Abgasstroms zum HC-Oxidationskatalysator 8 steuert bzw. regelt, wie dies zuvor in Verbindung mit dem Absperrorgan 14 und der Zweigleitung 7 bereits beschrieben worden ist.

Durch Einsatz eines Leitelements wird es auch möglich, den NO-Oxidationskatalysator 4 und den HC-Oxidationskatalysator 8 auf einem gemeinsamen Katalysatorsubstrat aufzubringen. Die Bereiche, die während der Regeration mit Kohlenwasserstoffen aus der Zuführeinheit, hier beispielhaft als Düse 9 ausgeführt, beaufschlagt werden, sind dabei als HC-Oxidationskatalysator 8 ausgebildet, insbesondere beschichtet, während die restlichen Bereiche als NO-Oxidationskatalysatoren 4 ausgeführt, insbesondere beschichtet, sind. Üblicherweise unterscheiden sich die unterschiedlichen Bereiche über den Querschnitt, also quer zur Strömungsrichung.

In der Fig. 4 ist ferner lediglich rein schematisch noch ein ebenfalls im Abgastrakt 1 angeordneter NO_{X}-Reduktionskatalysator 21 gezeigt, der zum Beispiel als NO_{X}-Speicherkatalysator oder SCR-Katalysator ausgebildet ist.

Ansonsten entspricht die Funktionsweise und Verfahrensführung derjenigen, wie sie in Verbindung mit den Figuren 1 bis 3 bereits beschrieben worden ist.

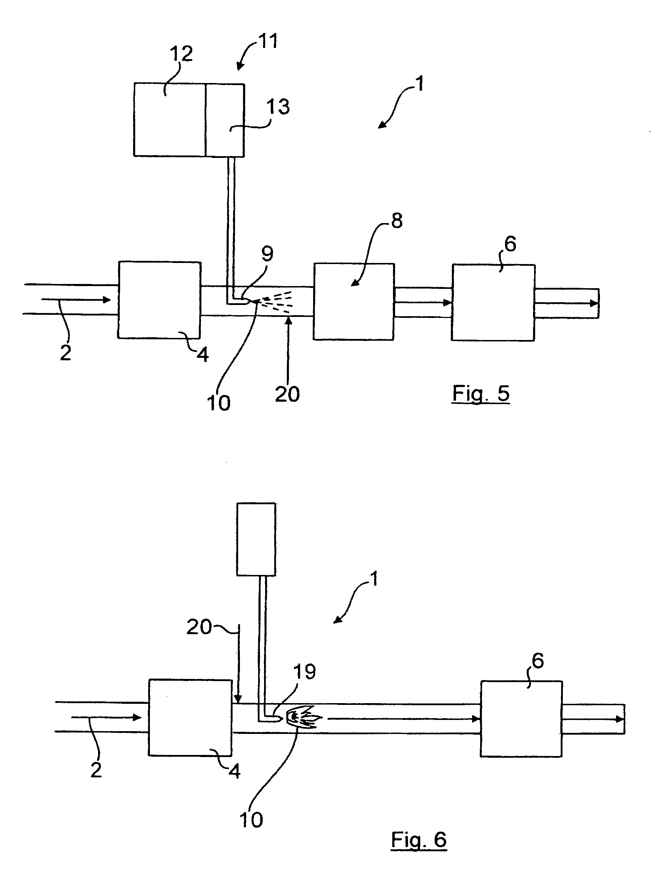

In der Fig. 5 ist eine nicht-erfindungsgemäße Ausführungsform gezeigt, bei der der NO-Oxidationskatalysator 4 und der HC-Oxidationskatalysator 8 nicht parallel geschaltet, sondern seriell angeordnet sind. Das heißt konkret, dass der HC-Oxidationskatalysator 8 stromab des NO-Oxidationskatalysators 4 und weiter stromauf des Partikelfilters 6 angeordnet ist. Die Zudosierung des Kraftstoffes 10 als Reduktionsmittel erfolgt dann hier ebenfalls wiederum so, dass dieser Kraftstoff nicht in den NO-Oxidationskatalysator 4 gelangen kann, in dem die Zudosierung stromab des NO-Oxidationskatalysators 4 und stromauf des HC-Oxidationskatalysators 8 erfolgt. Ansonsten entspricht die Verfahrensführung und die Funktionsweise derjenigen, wie sie bereits zuvor in Verbindung mit den Fig. 1 bis 4 näher erläutert worden ist. Der wesentliche Unterschied besteht hier somit darin, dass der Abgasstrom 2 im Gegensatz zu den Ausgestaltungen nach den Fig. 3 und 4 nicht aufgezweigt bzw. aufgeteilt wird, sondern der gesamte Abgasstrom 2 zuerst den NO-Oxidationskatalysator 4, anschließend den HC-Oxidationskatalysator 8 sowie weiter anschließend den Partikelfilter 6 durchströmt.

In der Fig. 6 ist schließlich eine zur Fig. 5 alternative und ebenfalls nicht-erfindungsgemäße Ausgestaltung gezeigt, bei der anstelle eines HC-Oxidationskatalysators 8 als Heizeinrichtung ein mit Kraftstoff betriebener Brenner 19 eingesetzt wird. Ein derartiger Brennereinsatz ist insbesondere auch in Verbindung mit den zuvor genannten Ausführungsformen, insbesondere in Verbindung mit der Ausführungsform nach Fig. 3 jederzeit möglich. Ansonsten entspricht der Aufbau der Fig. 6 demjenigen der Fig. 5, so dass zur Vermeidung von Wiederholungen auf die zuvor gemachten Ausführungen verwiesen wird.

Bei sämtlichen Ausführungsformen wird somit der Abgasstrom oder ein Teilabgasstrom über eine Heizeinrichtung geführt. Die dadurch zu erzielende Heizleistung ist allerdings, wie bereits zuvor beschrieben, durch die vorhandene Sauerstoffmenge limitiert. Um dies zu vermeiden, kann optional dem zu erhitzenden Abgasstrom nach Erreichen einer bestimmten vorgegebenen Temperatur und/oder einer vorgegebenen Zeit und/oder bei Unterschreiten eines vorgegebenen Lambda- oder Sauerstoffwertes, Frischluft zugeführt werden, zum Beispiel ein ladluftseitig abgezweigter Frischluftstrom. Die Frischluftzuführung 20 ist in den Fig. 3, 5 und 6 lediglich äußerst schematisch durch einen Pfeil dargestellt.

## Patentansprüche

1. Vorrichtung zur Regeneration eines im Abgastrakt einer Brennkraftmaschine angeordneten Partikelfilters mit wenigstens einem stromauf des Partikelfilters angeordneten NO-Oxidationskatalysator zur Oxidation von NO, insbesondere zu NO₂, wobei stromauf des Partikelfilters (6) ferner wenigstens eine Heizeinrichtung (8; 19) vorgesehen ist, mittels der ein zum Partikelfilter (6) geführter Abgasstrom (2"') in Abhängigkeit von definierten Regenerationsparametern, auf eine definierte Temperatur aufheizbar ist, **dadurch gekennzeichnet, dass** für die Durchführung einer wenigstens zeitweise kombinierten aktiven und passiven Partikelfilterregeneration die Heizeinrichtung (8) strömungstechnisch parallel zu dem NO-Oxidationskatalysator (4) angeordnet ist dergestalt, dass ein erster Abgasstrom (2') durch den NO-Oxidationskatalysator (4) und ein zweiter, aufzuheizender Abgasstrom (2") durch oder über die Heizeinrichtung (8) strömt und die beiden Abgasströme (2', 2") stromab des NO-Oxidationskatalysators (4) und der Heizeinrichtung (8) sowie stromauf des Partikelfilters (6) zusammengeführt sind.

2. Vorrichtung nach Anspruch 1, **dadurch gekennzeichnet, dass** wenigstens während der Regenerationsphase, die insbesondere durch eine definierte Anhebung der Abgastemperatur stromauf des Partikelfilters (6) charakterisiert ist, das Massenverhältnis zwischen im Abgas enthaltenen Kohlenstoff und Stickstoffdioxid mindestens 1:4, bevorzugt mindestens 1:8, beträgt.

3. Vorrichtung nach Anspruch 1 oder 2, **dadurch gekennzeichnet, dass** der zum Partikelfilter (6) geführte Abgasstrom (2"') mittels der wenigstens einen Heizeinrichtung (8; 19) auf eine Temperatur aufheizbar ist, die unter der Regenerationstemperatur einer reinen aktiven Partikelfilterregeneration mittels Zugabe von Kohlenwasserstoffen in den Abgasstrom liegt, insbesondere auf eine Temperatur von kleiner 600°C, bevorzugt von kleiner oder gleich in etwa 550°C, höchst bevorzugt von kleiner oder gleich in etwa 450°C aufheizbar ist, wobei die Temperatur bevorzugt in einem Temperaturfenster von in etwa 300°C bis 550°C, höchst bevorzugt in einem Temperaturfenster von in etwa 350°C bis 450°C liegt.

4. Vorrichtung nach einem der Ansprüche 1 bis 3, **dadurch gekennzeichnet, dass** die wenigstens eine Heizeinrichtung durch einen Brenner (19) oder einen als Heizkatalysator (8) ausgeführten Oxidationskatalysator, bevorzugt ein HC-Oxidationskatalysator, höchst bevorzugt ein HC-Oxidationskatalysator mit einer NO-Oxidationsaktivität, gebildet ist, wobei dann eine Zudosiervorrichtung (11) vorgesehen ist, mittels der dem Abgasstrom stromauf des Heizkatalysators ein Reduktionsmittel (10), vorzugsweise Kohlenwasserstoffe, für eine exotherme Reaktion in Abhängigkeit von definierten Zudosierparametern zu vorgegebener Zeiten in vorgegebener Menge, insbesondere periodisch, zudosierbar ist.

5. Vorrichtung nach einem der Ansprüche 1 bis 4, **dadurch gekennzeichnet, dass** eine vorzugsweise mittels eines Absperrorgans absperrbare Frischluftleitung (20) vorgesehen ist, mit der einem Abgasstrom stromauf der Heizeinrichtung (8; 19) und/oder stromauf des NO-Oxidationskatalysators (4) ein ladeluftseitiger Frischluftstrom und/oder ein stromab der Einmündung einer Abgasrückführleitung in eine Ladeluftleitung abgezweigter Ladeluftstrom oder ein mit Hilfe eines Gebläses oder Verdichters geförderter Frischluftstrom zuführbar ist.

6. Verfahren zur Regeneration eines im Abgastrakt einer Brennkraftmaschine angeordneten Partikelfilters, insbesondere zum Betreiben einer Vorrichtung nach einem der Ansprüche 1 bis 5, bei dem wenigstens ein stromauf des Partikelfilters angeordneter NO-Oxidationskatalysator zur Oxidation von NO, insbesondere zu NO₂, von einem Abgasstrom durchströmt wird, wobei stromauf des Partikelfilters (6) ferner wenigstens eine Heizeinrichtung (8; 19) vorgesehen ist, mittels der ein zum Partikelfilter (6) geführter Abgasstrom aufgeheizt wird, **dadurch gekennzeichnet, dass** der zum Partikelfilter (6) geführte Abgasstrom durch wenigstens zeitweise Kombination einer aktiven und passiven Partikelfilterregeneration, in Abhängigkeit von definierten Regenerationsparametern, insbesondere in Abhängigkeit von einem Beladungsgrad des Partikelfilters (6) und/oder von einem Wirkungsgrad einer NO₂-basierten Regeneration des Partikelfilters (6) mittels einer am wenigstens einen NO-Oxidationskatalysator (4) gebildeten NO₂-Menge, auf eine definierte Temperatur aufgeheizt wird, wobei die Heizeinrichtung (8) strömungstechnisch parallel zu dem NO-Oxidationskatalysator (4) angeordnet ist dergestalt, dass ein erster Abgasstrom (2') durch den NO-Oxidationskatalysator (4) und ein zweiter Abgasstrom (2") durch oder über die Heizeinrichtung (8) strömt und die beiden Abgasströme (2', 2") stromab des NO-Oxidationskatalysators (4) und der Heizeinrichtung (8) sowie stromauf des Partikelfilters (6) zusammengeführt werden.

7. Verfahren nach Anspruch 6, **dadurch gekennzeichnet, dass** wenigstens während der Regenerationsphase, die insbesondere durch eine definierte Anhebung der Abgastemperatur stromauf des Partikelfilters (6) charakterisiert ist, das Massenverhältnis zwischen im Abgas enthaltenen Kohlenstoff und Stickstoffdioxid mindestens 1:4, bevorzugt mindestens 1:8, beträgt.

8. Verfahren nach Anspruch 6 oder Anspruch 7, **dadurch gekennzeichnet, dass** der zum Partikelfilter (6) geführte Abgasstrom (2") mittels der wenigstens einen Heizeinrichtung (8; 19) auf eine Temperatur aufgeheizt wird, die unter der Regenerationstemperatur einer reinen aktiven Partikelfilterregeneration mittels Zugabe von Kohlenwasserstoffen in den Abgasstrom liegt, insbesondere auf eine Temperatur von kleiner 600°C, bevorzugt von kleiner oder gleich in etwa 550°C, höchst bevorzugt von kleiner oder gleich in etwa 450°C aufgeheizt wird, und/oder dass die Temperatur in einem Temperaturfenster von in etwa 300°C bis 550°C, höchst bevorzugt in einem Temperaturfenster von in etwa 350°C bis 450°C liegt.

9. Verfahren nach einem der Ansprüche 6 bis 8, **dadurch gekennzeichnet, dass** eine Steuer- und/oder Regeleinrichtung vorgesehen ist, mittels der die Temperatur des zum Partikelfilter (6) geführten Abgasstroms (2") in Abhängigkeit von einer NO₂-Konzentration und/oder der Beladung des Partikelfilters und/oder der Regenerationsfähigkeit des Partikelfilters in einem definierten Bereich wenigstens eines Abgasstroms vorgegeben wird.

10. Verfahren nach einem der Ansprüche 6 bis 9, **dadurch gekennzeichnet, dass** dem Abgasstrom stromauf der bevorzugt als Oxidationskatalysator oder als Brenner ausgebildeten Heizeinrichtung (8; 19) zu vorgegebenen Zeiten und/oder bei Überschreiten einer vorgegebener Abgastemperatur und/oder bei Unterschreiten eines vorgegebenen Lambdawerts und/oder bei Unterschreiten eines vorgegebenen Sauerstoffwerts eine vorgegebene Menge eines ladeluftseitigen Frischluftstroms und/oder eine vorgegebene Menge eines stromab der Einmündung einer Abgasrückführleitung in eine Ladeluftleitung abgezweigten Ladeluftstroms zugeführt wird.

11. Verfahren nach einem der Ansprüche 6 bis 10, **dadurch gekennzeichnet, dass** während der Regeneration des Partikelfilters (6) die NOₓ-Rohemission der Brennkraftmaschine und/oder die Oxidationsfähigkeit des NO-Oxidationskatalysators durch Verstellen von definierten Betriebsparametern, insbesondere dem Kraftstoffeinspritzdruck und/oder dem Einspritzbeginn und/oder der Abgasrückführungsrate und/oder der Anzahl der Einspritzungen, verändert, insbesondere angehoben wird.

## Claims

1. Device for regenerating a particle filter arranged in the exhaust tract of an internal combustion engine with at least one NO oxidation catalytic converter, which is arranged upstream of the particle filter, for the oxidation of NO, in particular to form NO₂, wherein, upstream of the particle filter (6), there is also provided at least one heating device (8; 19) by means of which an exhaust-gas flow (2"') conducted to the particle filter (6) can be heated to a defined temperature as a function of defined regeneration parameters, **characterized in that**, for carrying out active and passive particle filter regeneration which are combined at least at times, the heating device (8) is arranged in parallel, in terms of flow, with the NO oxidation catalytic converter (4), in such a way that a first exhaust-gas flow (2') flows through the NO oxidation catalytic converter (4) and a second exhaust-gas flow (2") to be heated flows through or over the heating device (8), and the two exhaust-gas flows (2', 2") are merged downstream of the NO oxidation catalytic converter (4) and the heating device (8) and upstream of the particle filter (6).

2. Device according to Claim 1, **characterized in that**, at least during the regeneration phase **characterized in** particular by a defined increase in the exhaust-gas temperature upstream of the particle filter (6), the mass ratio between carbon and nitrogen dioxide contained in the exhaust gas is at least 1:4, preferably at least 1:8.

3. Device according to Claim 1 or 2, **characterized in that** the exhaust-gas flow (2"') conducted to the particle filter (6) can be heated by means of the at least one heating device (8; 19) to a temperature which lies below the regeneration temperature of a pure active particle filter regeneration by means of the metering of hydrocarbons into the exhaust-gas flow, in particular to a temperature of less than 600°C, preferably of less than or equal to approximately 550°C, most preferably of less than or equal to approximately 450°C, the temperature lying preferably in a temperature window from approximately 300°C to 550°C, most preferably in a temperature window from approximately 350°C to 450°C.

4. Device according to one of Claims 1 to 3, **characterized in that** the at least one heating device is formed by a burner (19) or an oxidation catalytic converter designed as a heating catalytic converter (8), preferably an HC oxidation catalytic converter, most preferably an HC oxidation catalytic converter with NO oxidation activity, wherein a dosing device (11) is then provided by means of which a reducing agent (10), preferably hydrocarbons, for an exothermic reaction can be dosed into the exhaust-gas flow upstream of the heating catalytic converter at predefined times and in predefined quantities, in particular periodically, as a function of defined dosing parameters.

5. Device according to one of Claims 1 to 4, **characterized in that** a fresh-air line (20) is provided which can preferably be shut off by means of a shutoff element and by means of which a charge-air-side fresh-air flow and/or a charge air flow branched off downstream of the opening point of an exhaust-gas recirculation line into a charge-air line or a fresh-air flow delivered by means of a blower or compressor can be supplied to an exhaust-gas flow upstream of the heating device (8; 19) and/or upstream of the NO oxidation catalytic converter (4).

6. Method for regenerating a particle filter arranged in the exhaust tract of an internal combustion engine, in particular for operating a device according to one of Claims 1 to 5, in which method at least one NO oxidation catalytic converter, which is arranged upstream of the particle filter, for the oxidation of NO in particular to form NO₂ is traversed by an exhaust-gas flow, wherein, upstream of the particle filter (6), there is also provided at least one heating device (8; 19) by means of which an exhaust-gas flow conducted to the particle filter (6) is heated, **characterized in that** the exhaust-gas flow conducted to the particle filter (6) is heated to a defined temperature by at least at times combining an active and passive particle filter regeneration, as a function of defined regeneration parameters, in particular as a function of a degree of loading of the particle filter (6) and/or as a function of an efficiency of an NO₂-based regeneration of the particle filter (6) by means of an NO₂ quantity formed on the at least one NO oxidation catalytic converter (4), wherein the heating device (8) is arranged in parallel, in terms of flow, with the NO oxidation catalytic converter (4), in such a way that a first exhaust-gas flow (2') flows through the NO oxidation catalytic converter (4) and a second exhaust-gas flow (2") flows through or over the heating device (8), and the two exhaust-gas flows (2', 2") are merged downstream of the NO oxidation catalytic converter (4) and the heating device (8) and upstream of the particle filter (6).

7. Method according to Claim 6, **characterized in that** at least during the regeneration phase, which is **characterized in** particular by a defined increase in the exhaust-gas temperature upstream of the particle filter (6), the mass ratio between carbon and nitrogen dioxide contained in the exhaust gas is at least 1:4, preferably at least 1:8.

8. Method according to Claim 6 or Claim 7, **characterized in that** the exhaust-gas flow (2") conducted to the particle filter (6) is heated by means of the at least one heating device (8; 19) to a temperature which lies below the regeneration temperature of a pure active particle filter regeneration by means of the metering of hydrocarbons into the exhaust-gas flow, in particular to a temperature of less than 600°C, preferably of less than or equal to approximately 550°C, most preferably of less than or equal to approximately 450°C, and/or **in that** the temperature lies in a temperature window from approximately 300°C to 550°C, most preferably in a temperature window from approximately 350°C to 450°C.

9. Method according to one of Claims 6 to 8, **characterized in that** a control and/or regulating device is provided by means of which the temperature of the exhaust-gas flow (2") conducted to the particle filter (6) is predefined in a defined region of at least one exhaust-gas flow as a function of an NO₂ concentration and/or the loading of the particle filter and/or the regeneration capability of the particle filter.

10. Method according to one of Claims 6 to 9, **characterized in that** a predefined quantity of a charge-air-side fresh-air flow and/or a predefined quantity of a charge-air flow branched off downstream of the opening point of an exhaust-gas recirculation line into a charge-air line is supplied to the exhaust-gas flow upstream of the heating device (8; 19), which is designed preferably as an oxidation catalytic converter or as a burner, at predefined times and/or when a predefined exhaust-gas temperature is exceeded and/or when a predefined lambda value is undershot and/or when a predefined oxygen value is undershot.

11. Method according to one of Claims 6 to 10, **characterized in that**, during the regeneration of the particle filter (6), the NOₓ untreated emissions of the internal combustion engine and/or the oxidation capability of the NO oxidation catalytic converter are/is varied, in particular increased, by adjusting defined operating parameters, in particular the fuel injection pressure and/or the start of injection and/or the exhaust-gas recirculation rate and/or the number of injections.

## Revendications

1. Dispositif de régénération d'un filtre à particules disposé dans la conduite de gaz d'échappement d'un moteur à combustion interne, avec au moins un catalyseur d'oxydation de NO agencé en amont du filtre à particules pour l'oxydation de NO, en particulier en NO₂, dans lequel il est en outre prévu en amont du filtre à particules (6) au moins un dispositif de chauffage (8; 19), au moyen duquel un courant de gaz d'échappement (2"') conduit au filtre à particules (6) peut être chauffé à une température définie en fonction de paramètres de régénération définis, **caractérisé en ce que**, pour l'exécution d'une régénération du filtre à particules active et passive combinée au moins temporairement, le dispositif de chauffage (8) est disposé, au point de vue technique de l'écoulement, parallèlement au catalyseur d'oxydation de NO (4), de telle manière qu'un premier courant de gaz d'échappement (2') s'écoule à travers le catalyseur d'oxydation de NO (4) et qu'un deuxième courant de gaz d'échappement à chauffer (2") s'écoule à travers ou sur le dispositif de chauffage (8), et que les deux courants de gaz d'échappement (2', 2") soient réunis en aval du catalyseur d'oxydation de NO (4) et du dispositif de chauffage (8) ainsi qu'en amont du filtre à particules (6).

2. Dispositif selon la revendication 1, **caractérisé en ce qu'**au moins pendant la phase de régénération, qui est caractérisée en particulier par une hausse définie de la température des gaz d'échappement en amont du filtre à particules (6), le rapport massique entre le carbone et le dioxyde d'azote contenus dans les gaz d'échappement vaut au moins 1:4, de préférence au moins 1:8.

3. Dispositif selon la revendication 1 ou 2, **caractérisé en ce que** le courant de gaz d'échappement (2"') conduit au filtre à particules (6) peut être chauffé au moyen dudit au moins un dispositif de chauffage (8; 19) à une température, qui se situe en dessous de la température de régénération d'une régénération de filtre à particules active pure par addition d'hydrocarbures dans le courant de gaz d'échappement, en particulier peut être chauffé à une température inférieure à 600°C, de préférence inférieure ou égale à environ 550°C, de préférence encore inférieure ou égale à environ 450°C, dans lequel la température se situe de préférence dans une fenêtre de température d'environ 300°C à 550°C, et de préférence encore dans une fenêtre de température d'environ 350°C à 450°C.

4. Dispositif selon l'une quelconque des revendications 1 à 3, **caractérisé en ce que** ledit au moins un dispositif de chauffage est formé par un brûleur (19) ou un catalyseur d'oxydation réalisé sous la forme d'un catalyseur à chaud (8), de préférence un catalyseur d'oxydation de HC, de préférence encore un catalyseur d'oxydation de HC avec une activité d'oxydation de NO, dans lequel il est alors prévu un dispositif d'ajout dosé (11), au moyen duquel un agent réducteur (10), de préférence des hydrocarbures, peut être ajouté par doses à des instants prédéterminés, en une quantité prédéterminée, en particulier de façon périodique, au courant de gaz d'échappement en amont du catalyseur à chaud, pour une réaction exothermique en fonction de paramètres de dosage définis.

5. Dispositif selon l'une quelconque des revendications 1 à 4, **caractérisé en ce qu'**il est prévu une conduite d'air frais (20), qui peut de préférence être fermée au moyen d'un organe de fermeture, avec laquelle un courant d'air frais du côté de l'air d'admission peut être ajouté à un courant de gaz d'échappement en amont du dispositif de chauffage (8; 19) et/ou en amont du catalyseur d'oxydation de NO (4) et/ou un courant d'air d'admission dérivé en aval de l'embouchure d'une conduite de recyclage de gaz d'échappement dans une conduite d'air d'admission ou un courant d'air frais transporté à l'aide d'un ventilateur ou d'un compresseur peut être ajouté à un courant de gaz d'échappement.

6. Procédé de régénération d'un filtre à particules disposé dans la conduite de gaz d'échappement d'un moteur à combustion interne, en particulier pour la conduite d'un dispositif selon l'une quelconque des revendications 1 à 5, dans lequel au moins un catalyseur d'oxydation de NO disposé en amont du filtre à particules pour l'oxydation du NO, en particulier en NO₂, est traversé par un courant de gaz d'échappement, dans lequel il est en outre prévu en amont du filtre à particules (6) au moins un dispositif de chauffage (8; 19), au moyen duquel on chauffe un courant de gaz d'échappement conduit au filtre à particules (6), caractérisé en ce l'on chauffe le courant de gaz d'échappement conduit au filtre à particules (6) à une température définie, par la combinaison au moins temporaire d'une régénération de filtre à particules active et passive, en fonction de paramètres de régénération définis, en particulier en fonction du degré de chargement du filtre à particules (6) et/ou d'un rendement d'une régénération à base de NO₂ du filtre à particules (6) au moyen d'une quantité de NO₂ formée audit au moins un catalyseur d'oxydation de NO (4), dans lequel le dispositif de chauffage (8) est disposé, au point de vue technique de l'écoulement, parallèlement au catalyseur d'oxydation de NO (4), de telle manière qu'un premier courant de gaz d'échappement (2') s'écoule à travers le catalyseur d'oxydation de NO (4) et qu'un deuxième courant de gaz d'échappement (2") s'écoule à travers ou sur le dispositif de chauffage (8), et que les deux courants de gaz d'échappement (2', 2") soient réunis en aval du catalyseur d'oxydation de NO (4) et du dispositif de chauffage (8) ainsi qu'en amont du filtre à particules (6).

7. Procédé selon la revendication 6, **caractérisé en ce qu'**au moins pendant la phase de régénération, qui est caractérisée en particulier par une hausse définie de la température des gaz d'échappement en amont du filtre à particules (6), le rapport massique entre le carbone et le dioxyde d'azote contenus dans les gaz d'échappement vaut au moins 1:4, de préférence au moins 1:8.

8. Procédé selon la revendication 6 ou la revendication 7, **caractérisé en ce que** l'on chauffe le courant de gaz d'échappement (2") conduit au filtre à particules (6) au moyen dudit au moins un dispositif de chauffage (8; 19) à une température, qui se situe en dessous de la température de régénération d'une régénération de filtre à particules active pure par addition d'hydrocarbures dans le courant de gaz d'échappement, on le chauffe en particulier à une température inférieure à 600°C, de préférence inférieure ou égale à environ 550°C, de préférence encore inférieure ou égale à environ 450°C, et/ou **en ce que** la température se situe dans une fenêtre de température d'environ 300°C à 550°C, et de préférence encore dans une fenêtre de température d'environ 350°C à 450°C.

9. Procédé selon l'une quelconque des revendications 6 à 8, **caractérisé en ce qu'**il est prévu un système de commande et/ou de régulation, au moyen duquel on prédétermine la température du courant de gaz d'échappement (2") conduit au filtre à particules (6) en fonction d'une concentration en NO₂ et/ou du chargement du filtre à particules et/ou du pouvoir de régénération du filtre à particules dans une plage définie d'au moins un courant de gaz d'échappement.

10. Procédé selon l'une quelconque des revendications 6 à 9, **caractérisé en ce que** l'on ajoute au courant de gaz d'échappement, en amont du dispositif de chauffage (8; 19) réalisé de préférence sous forme de catalyseur d'oxydation ou de brûleur, à des instants prédéterminés et/ou en cas de montée au-dessus d'une température de gaz d'échappement prédéterminée et/ou en cas de descente en dessous d'une valeur de lambda prédéterminée et/ou en cas de descente en dessous d'un taux d'oxygène prédéterminé, une quantité prédéterminée d'un courant d'air frais du côté de l'air d'admission et/ou une quantité prédéterminée d'un courant d'air d'admission dérivé en aval de l'embouchure d'une conduite de recyclage de gaz d'échappement dans une conduite d'air d'admission.

11. Procédé selon l'une quelconque des revendications 6 à 10, **caractérisé en ce que**, pendant la régénération du filtre à particules (6), on fait varier, en particulier on augmente, l'émission brute de NOₓ du moteur à combustion interne et/ou le pouvoir oxydant du catalyseur d'oxydation de NO par le réglage de paramètres de fonctionnement définis, en particulier de la pression d'injection du carburant et/ou du début de l'injection et/ou du taux de recyclage de gaz d'échappement et/ou du nombre d'injections.
